# FASCICULE DE BREVET EUROPEEN

(11) **EP 0 717 330 B1**
(45) Date de publication et mention de la délivrance du brevet: **21.04.1999**
(21) Numéro de dépôt: 95402642.3
(22) Date de dépôt: 23.11.1995
(51) Int. Cl.: G05D 1/06

(54) **Procédé et dispositif pour fournir une information, alerte ou alarme pour un aéronef à proximité du sol**
Verfahren und Vorrichtung zur Erzeugung einer Information, eines Alarmes oder einer Warnung für ein Flugzeug in Bodennähe
Method and apparatus for providing one information, alarm or warning for an aircraft at ground proximity

(30) Priorité: 15.12.1994 FR 9415113
(43) Date de publication de la demande: 19.06.1996
(73) Titulaire: AEROSPATIALE SOCIETE NATIONALE INDUSTRIELLE, 75016 Paris (FR)
(72) Inventeur: Coquin, Laurent, F-31400 Toulouse (FR)
(74) Mandataire: Bonnetat, Christian

(56) Documents cités:
- EP-A- 0 565 399
- WO-A-85/03566
- WO-A-86/05023

## Description

La présente invention concerne un procédé et un dispositif pour fournir une information, alerte ou alarme pour un aéronef évoluant au-dessus d'un terrain de relief connu, notamment au voisinage d'une piste d'atterrissage pour l'aéronef, lorsque la trajectoire de l'aéronef est susceptible d'intercepter un relief dudit terrain.

Il s'est avéré nécessaire de prévoir, pour des aéronefs en vol, un système d'alarme permettant de détecter et de signaler en temps voulu une proximité, dangereuse pour l'aéronef, du relief (d'une manière générale, du sol). Un système actuellement largement répandu est le GPWS pour "Ground Proximity Warning System" ou "Système d'alerte vis-à-vis de la proximité du sol". Le GPWS utilise la mesure radioaltimétrique de l'altitude de l'aéronef par rapport au sol situé à la verticale de sa position instantanée. La comparaison de ces données radioaltimétriques et des paramètres de vitesse verticale entre autres (vitesse verticale anémobarométrique et taux de rapprochement du sol radioaltimétrique), par rapport à différents seuils prédéterminés, permet le déclenchement de différents types d'alarmes visuelles et sonores. Les alarmes permettent d'avertir le pilote d'une situation dangereuse risquant d'entraîner une collision avec le sol dans un avenir proche si aucune action corrective n'est menée sur les commandes permettant de regagner rapidement une altitude suffisante pour garantir la sécurité de l'aéronef. L'inconvénient principal de ce système réside dans le nombre élevé de fausses alarmes qu'il engendre.

On connaît également, voir par exemple EP-A-0 565 399, un autre système de ce genre, mais basé sur un principe différent de celui utilisé par le GPWS, pour évaluer le niveau de danger que représente le sol pour l'aéronef. Dans ce cas, la position mesurée de l'aéronef dans les plans horizontal et vertical est utilisée afin de calculer une prédiction de l'évolution des différentes trajectoires possibles de l'aéronef dans les instants qui suivent la mesure, et de comparer l'enveloppe de ces trajectoires aux altitudes de sécurité décrites dans une base de données relatives au sol, calculées à partir, notamment, des différentes hauteurs de la surface du sol, survolée par les trajectoires prédites.

La détection d'une intersection entre l'enveloppe des trajectoires et le volume de sécurité défini par la base de données relatives au sol permet de prédire que l'aéronef risque de sortir du domaine des altitudes de sécurité dans un intervalle de temps déterminé à l'avance. Une alerte ou alarme peut être alors engendrée afin d'avertir le pilote de cette situation de danger pour qu'il retrouve une altitude de sécurité acceptable aussi rapidement que possible.

Dans ce système, la base de données relatives au sol (terrain) est composée de l'enregistrement d'altitudes de sécurité correspondant à chacune des mailles de la grille décrivant le terrain. La grille définit des subdivisions de la surface du globe terrestre, qui peuvent, par exemple, être référencées en coordonnées géographiques. La grille est alors constituée d'un réseau de mailles adjacentes. A chaque maille, il est attribué une altitude de sécurité garantissant que le survol de cette maille, au minimum à cette altitude, n'entraînera pas de collision avec le terrain décrit dans cette maille. L'inconvénient principal de ce système réside dans le faible délai laissé à l'équipage pour réagir pour certaines variations rapides du relief associées à un nombre, qui peut être élevé, de fausses alarmes qu'elles engendrent.

L'alarme est engendrée en se basant sur la détection d'un "conflit" (interception) entre la trajectoire de l'aéronef et le relief d'un élément (maille) de la base de données relatives au sol ou terrain.

La position (selon des coordonnées Ox, Oy et Oz) de l'aéronef est extrapolée pour un temps d'anticipation maximal forfaitaire de l'ordre de la minute ou moins (par exemple 30 ou 60 secondes) suivant la direction du vecteur vitesse-sol (vitesse par rapport au sol).

Ce délai a été choisi forfaitairement afin d'englober les temps de réaction suivants :
- temps de réaction des capteurs ;
- temps de calcul des algorithmes d'alarme ;
- temps de réaction de l'équipage ; ce temps dépend de la phase de vol car la vigilance est variable au cours d'un vol ;
- temps de réaction entre la commande du pilote et le mouvement des gouvernes ;
- temps propre aux performances minimales de l'aéronef, dépendant de la configuration (trains, volets, panne moteur, notamment) ;
- temps lié aux marges par rapport au terrain.

La prédiction de la trajectoire de l'aéronef est obtenue par le calcul du segment de prédiction de trajectoire en trois dimensions. Il s'agit d'une extrapolation linéaire le long du vecteur vitesse-sol de l'aéronef, c'est-à-dire tangentant la trajectoire. A partir de là, on détermine les éléments du relief que l'aéronef est susceptible de survoler durant le temps d'extrapolation. Pour chaque maille de la grille survolée, on calcule l'altitude prédite de l'aéronef à l'entrée et à la sortie de la maille, en utilisant la vitesse verticale Vz de l'aéronef. Quand le segment de trajectoire extrapolé de l'aéronef intercepte une maille de la grille de terrain en ayant une altitude prédite inférieure à l'altitude de la zone concernée, l'alarme est déclenchée.

Inévitablement, il arrive un moment dans la prédiction de trajectoire où le segment de prédiction intercepte le sol, pendant la phase d'atterrissage, avant le toucher des roues. Cette alarme est une alarme dite de nuisance, car elle intervient alors que l'aéronef est en situation de vol normale, le pilote amorçant l'atterrissage.

Ce signal est gênant pour le pilote, car ce dernier est habitué à réagir vite et d'une certaine façon. Cependant, si le traitement d'une alarme n'est pas unique et porte à confusion sur le type d'action de sauvegarde à engager (dans ce cas, une absence d'action), l'efficacité de l'action corrective sera par conséquent réduite car moins rapide.

La présente invention a pour but d'éviter cet inconvénient.

A cet effet, le procédé pour fournir une information, alerte ou alarme pour un aéronef évoluant au-dessus d'un terrain de relief connu, notamment au voisinage d'une piste d'atterrissage pour ledit aéronef, lorsque la trajectoire de l'aéronef est susceptible d'intercepter un relief dudit terrain, dans lequel :
- on établit, pour ledit terrain, une grille de coordonnées géographiques, dont chaque maille présente un relief défini,
- on prédit la trajectoire de l'aéronef pendant un intervalle de temps prédéterminé,
- on détermine une intersection éventuelle entre ladite trajectoire et le relief d'au moins une desdites mailles, et
- on déclenche une alerte ou alarme en fonction du résultat de ladite détermination,
est remarquable, selon l'invention, en ce que l'on effectue une comparaison entre les mailles de la grille interceptées par ladite trajectoire prédite et les mailles contenant la piste d'atterrissage pour l'aéronef, de sorte que, si l'information fournie par ladite comparaison est négative, l'alerte ou alarme reste susceptible d'être activée, et l'alerte ou alarme est inhibée si l'information fournie par ladite comparaison est positive et si, par ailleurs, les conditions suivantes :
- la vitesse de l'aéronef par rapport au sol est inférieure ou égale à un seuil prédéterminé,
- l'altitude de l'aéronef par rapport au sol est inférieure ou égale à un seuil prédéterminé,
- l'aéronef se trouve au moins sensiblement dans l'axe de la piste d'atterrissage, et
- la configuration aérodynamique de l'aéronef correspond à la phase d'atterrissage de celui-ci,
sont simultanément remplies.

Ainsi, on définit des critères permettant de détecter que le rapprochement de l'aéronef du sol s'effectue dans une zone d'approche d'une piste d'atterrissage, alors qu'en même temps, les conditions de l'atterrissage normal sont remplies. Par ailleurs, l'inhibition de l'alerte ou alarme intervient avec une avance suffisante au plus égale à l'intervalle de temps choisi (par exemple, 30 secondes) pour la prédiction de trajectoire.

Avantageusement, pour un terrain donné, au voisinage d'une ou des pistes d'atterrissage contenues dans ce terrain, on établit une grille au maillage plus fin que partout ailleurs.

De préférence, comme conditions de configuration aérodynamique de l'aéronef associées à la phase d'atterrissage, on prend en compte les critères suivants : becs et volets sortis, et train d'atterrissage sorti.

La présente invention concerne également un dispositif pour fournir une information, alerte ou alarme, pour la mise en oeuvre du procédé ci-dessus, pour un aéronef évoluant au-dessus d'un terrain de relief connu, notamment au voisinage d'une piste d'atterrissage pour ledit aéronef, lorsque la trajectoire de l'aéronef est susceptible d'intercepter un relief dudit terrain, comprenant :
- des moyens d'établissement, pour ledit terrain, d'une grille de coordonnées géographiques, dont chaque maille présente un relief défini,
- des moyens de prédiction de la trajectoire de l'aéronef pendant un intervalle de temps prédéterminé,
- des moyens de détermination d'une intersection éventuelle entre ladite trajectoire prédite et le relief d'au moins une desdites mailles, et
- des moyens d'alerte ou alarme susceptibles d'être activés sous la dépendance desdits moyens de détermination,
remarquable en ce qu'il comporte, entre lesdits moyens de détermination et lesdits moyens d'alerte ou alarme, des moyens de comparaison entre les mailles de ladite grille interceptées par ladite trajectoire prédite et les mailles contenant la piste d'atterrissage pour l'aéronef, tels que, si l'information fournie par lesdits moyens de comparaison est négative, lesdits moyens d'alerte ou alarme restent susceptibles d'être activés, et lesdits moyens d'alerte ou alarme sont inhibés si l'information fournie par lesdits moyens de comparaison est positive et si, par ailleurs, les conditions suivantes :
- la vitesse de l'aéronef par rapport au sol est inférieure ou égale à un seuil prédéterminé,
- l'altitude de l'aéronef par rapport au sol est inférieure ou égale à un seuil prédéterminé,
- l'aéronef se trouve au moins sensiblement dans l'axe de la piste d'atterrissage, et
- la configuration aérodynamique de l'aéronef correspond à la phase d'atterrissage de celui-ci,
sont simultanément remplies.

Avantageusement, entre lesdits moyens de comparaison et lesdits moyens d'alerte ou alarme, il est prévu un élément logique, tel qu'une porte ET, dont les entrées reçoivent l'information fournie par lesdits moyens de comparaison quand elle est positive et les conditions relatives à la situation et à la configuration de l'aéronef, et dont la sortie est reliée auxdits moyens d'alerte ou alarme.

Les figures du dessin annexé feront bien comprendre comment l'invention peut être réalisée.

La figure 1 est un schéma synoptique du dispositif selon l'invention.

La figure 2 montre une grille de coordonnées géographiques, dont certaines mailles, de relief défini, sont traversées par un segment de trajectoire prédit d'un aéronef.

Les figures 3 et 4, relativement à la grille de la figure 2, illustrent en élévation, respectivement, le cas où ledit segment de trajectoire prédit n'intercepte pas, et intercepte, le relief d'une maille de ladite trajectoire.

La figure 5 montre une grille semblable à celle de la figure 2 au voisinage d'une piste d'atterrissage pour l'aéronef.

La figure 6 est une vue en élévation de la figure 5.

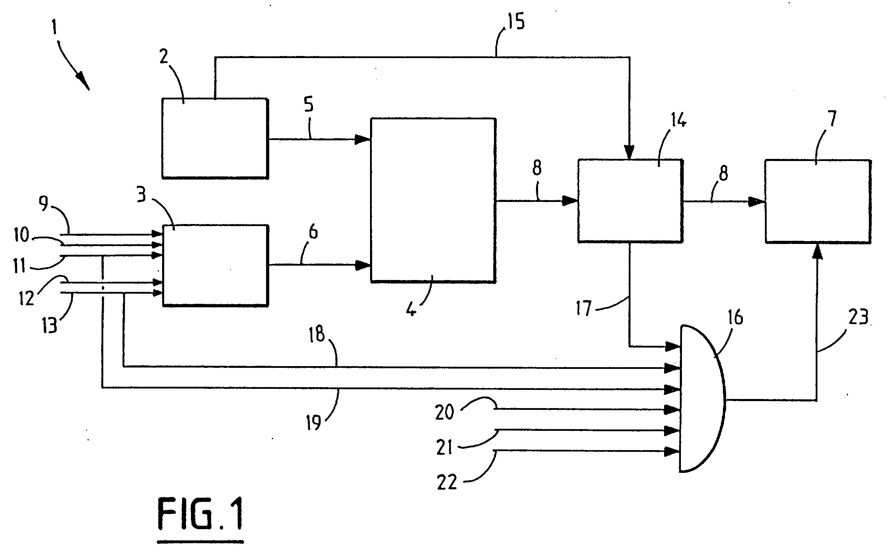

En regard de la figure 1, le dispositif 1 pour fournir une information, alerte ou alarme pour un aéronef évoluant au-dessus d'un terrain de relief connu, notamment au voisinage d'une piste d'atterrissage pour ledit aéronef, lorsque la trajectoire de l'aéronef est susceptible d'intercepter un relief dudit terrain, comprend :
- des moyens d'établissement 2, pour ledit terrain, d'une grille de coordonnées géographiques, dont chaque maille présente un relief défini,
- des moyens de prédiction 3 de la trajectoire de l'aéronef pendant un intervalle de temps prédéterminé,
- des moyens de détermination 4 d'une intersection éventuelle entre ladite trajectoire prédite et le relief d'au moins une desdites mailles, lesdits moyens de détermination 4 étant reliés auxdits moyens d'établissement 2 de la grille et auxdits moyens de prédiction de trajectoire 3 par des liaisons respectives 5 et 6,
- des moyens d'alerte ou alarme 7 susceptibles d'être activés sous la dépendance desdits moyens de détermination 4 auxquels ils sont reliés par une liaison 8.

Plus précisément, la trajectoire de l'aéronef peut être prédite, sur un intervalle de temps prédéterminé, en entrant dans les moyens de prédiction 3 les informations relatives à la position de l'aéronef à l'instant initial : latitude 9, longitude 10, altitude 11 ; à l'intervalle de temps 12 considéré ; et à la vitesse par rapport au sol 13 de l'aéronef.

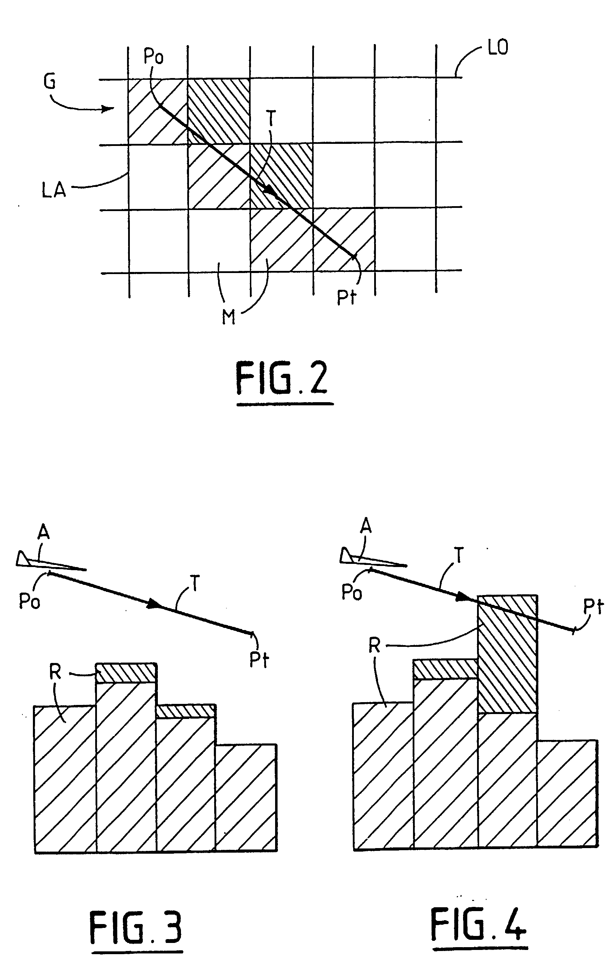

La figure 2 montre une grille G de coordonnées géographiques LA, LO, dont certaines mailles M, de relief défini R (comme on le voit sur les figures 3 et 4), sont traversées par un segment de trajectoire T prédit de l'aéronef A, d'une position Po à une position Pt. Comme indiqué ci-dessus, un modèle de prédiction de trajectoire simple peut être utilisé, considérant l'extrapolation du vecteur vitesse-sol de l'aéronef pendant un temps t d'extrapolation prédéterminé, égal par exemple à 30 secondes.

Selon le segment de trajectoire ainsi prédit et le relief des mailles traversées, on peut prévoir s'il existe un risque (figure 4), ou non (figure 3), que la trajectoire prédite T de l'aéronef A intercepte le relief d'une maille, et cela avec suffisamment d'avance pour pouvoir y remédier à temps, grâce à l'alerte ou alarme déclenchée à ce moment.

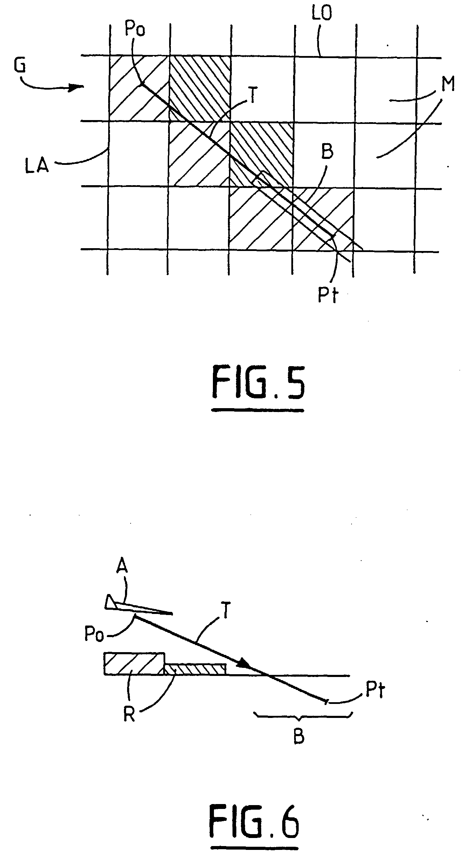

Cependant, comme illustré sur les figures 5 et 6, cette façon de procéder entraîne inévitablement, au voisinage d'une piste d'atterrissage B, que la trajectoire prédite T de l'aéronef A "rencontrera" le sol, en déclenchant ainsi une alerte ou alarme intempestive.

Pour remédier à cet inconvénient, le dispositif 1 selon l'invention comporte (figure 1), entre les moyens de détermination 4 et les moyens d'alerte ou alarme 7, des moyens de comparaison 14 entre les mailles de la grille G interceptées par la trajectoire prédite T et les mailles contenant la piste d'atterrissage B pour l'aéronef A, tels que, si l'information fournie par les moyens de comparaison 14 (reliés par la liaison 15 aux moyens 2 d'établissement de la grille) est négative (absence d"'intersection" avec les mailles de la piste), les moyens d'alerte ou alarme 7 restent susceptibles d'être activés, tandis qu'ils sont inhibés si l'information fournie par les moyens de comparaison 14 est positive (existence d'une "intersection" avec les mailles de la piste) et si, par ailleurs, les conditions suivantes :
- la vitesse de l'aéronef par rapport au sol est inférieure ou égale à un seuil prédéterminé (vitesse-sol inférieure ou égale à la vitesse maximale autorisée au cours de la procédure d'approche),
- l'altitude de l'aéronef par rapport au sol est inférieure ou égale à un seuil prédéterminé (altitude inférieure ou égale à l'altitude maximale de décision au cours de la procédure d'approche),
- l'aéronef se trouve au moins sensiblement dans l'axe de la piste d'atterrissage (avec une certaine latitude de part et d'autre de l'axe afin de prendre en compte n'importe quel type d'approche sur cet axe),
- la configuration aérodynamique de l'aéronef correspond à la phase d'atterrissage de celui-ci (becs et volets sortis, train sorti).

Comme on le voit sur la figure 1, ces différentes informations sont transmises aux entrées d'une porte ET 16, à savoir :
- comparaison positive par la liaison 17,
- vitesse de l'aéronef par la liaison 18,
- altitude de l'aéronef par la liaison 19,
- cap de l'aéronef par la liaison 20,
- configuration aérodynamique de l'aéronef par la liaison 21,
- configuration du train d'atterrissage par la liaison 22.

Toutes ces conditions étant remplies simultanément, l'alerte ou l'alarme est inhibée (liaison 23 entre la sortie de la porte ET 16 et les moyens d'alerte ou alarme 7). Cela se traduit pour le pilote par l'absence des informations d'alarme visuelles et sonores. L'inhibition de l'alarme intervient ainsi avec une avance au maximum égale au temps d'extrapolation choisi pour la trajectoire, par exemple 30 secondes comme déjà indiqué.

Il convient de noter de plus qu'au voisinage de la piste d'atterrissage, la définition de la grille de coordonnées géographiques du terrain devient fondamentale. En d'autres termes, il est alors nécessaire d'avoir un maillage suffisamment fin aux abords immédiats de la piste afin d'améliorer la précision pour déterminer sans ambiguïté si la piste est effectivement visée.

## Revendications

1. Procédé pour fournir une information, alerte ou alarme pour un aéronef évoluant au-dessus d'un terrain de relief connu, notamment au voisinage d'une piste d'atterrissage pour ledit aéronef, lorsque la trajectoire de l'aéronef est susceptible d'intercepter un relief dudit terrain, dans lequel :
- on établit, pour ledit terrain, une grille de coordonnées géographiques, dont chaque maille présente un relief défini,
- on prédit la trajectoire de l'aéronef pendant un intervalle de temps prédéterminé,
- on détermine une intersection éventuelle entre ladite trajectoire et le relief d'au moins une desdites mailles, et
- on déclenche une alerte ou alarme en fonction du résultat de ladite détermination,
caractérisé en ce que l'on effectue une comparaison entre les mailles de la grille interceptées par ladite trajectoire prédite et les mailles contenant la piste d'atterrissage pour l'aéronef, de sorte que, si l'information fournie par ladite comparaison est négative, l'alerte ou alarme reste susceptible d'être activée, et l'alerte ou alarme est inhibée si l'information fournie par ladite comparaison est positive et si, par ailleurs, les conditions suivantes :
- la vitesse de l'aéronef par rapport au sol est inférieure ou égale à un seuil prédéterminé,
- l'altitude de l'aéronef par rapport au sol est inférieure ou égale à un seuil prédéterminé,
- l'aéronef se trouve au moins sensiblement dans l'axe de la piste d'atterrissage, et
- la configuration aérodynamique de l'aéronef correspond à la phase d'atterrissage de celui-ci,
sont simultanément remplies.

2. Procédé selon la revendication 1,
caractérisé en ce que, pour un terrain donné, au voisinage d'une ou des pistes d'atterrissage contenues dans ce terrain, on établit une grille au maillage plus fin que partout ailleurs.

3. Procédé selon la revendication 1 ou la revendication 2,
caractérisé en ce que, comme conditions de configuration aérodynamique de l'aéronef associées à la phase d'atterrissage, on prend en compte les critères suivants : becs et volets sortis, et train d'atterrissage sorti.

4. Dispositif pour fournir une information, alerte ou alarme, pour la mise en oeuvre du procédé selon l'une quelconque des revendications 1 à 3, pour un aéronef évoluant au-dessus d'un terrain de relief connu, notamment au voisinage d'une piste d'atterrissage pour ledit aéronef, lorsque la trajectoire de l'aéronef est susceptible d'intercepter un relief dudit terrain, comprenant :
- des moyens d'établissement, pour ledit terrain, d'une grille de coordonnées géographiques, dont chaque maille présente un relief défini,
- des moyens de prédiction de la trajectoire de l'aéronef pendant un intervalle de temps prédéterminé,
- des moyens de détermination d'une intersection éventuelle entre ladite trajectoire prédite et le relief d'au moins une desdites mailles, et
- des moyens d'alerte ou alarme susceptibles d'être activés sous la dépendance desdits moyens de détermination,
caractérisé en ce qu'il comporte, entre lesdits moyens de détermination (4) et lesdits moyens d'alerte ou alarme (7), des moyens de comparaison (14) entre les mailles de ladite grille interceptées par ladite trajectoire prédite et les mailles contenant la piste d'atterrissage pour l'aéronef, tels que, si l'information fournie par lesdits moyens de comparaison (14) est négative, lesdits moyens d'alerte ou alarme (7) restent susceptibles d'être activés, et lesdits moyens d'alerte ou alarme (7) sont inhibés si l'information fournie par lesdits moyens de comparaison (14) est positive et si, par ailleurs, les conditions suivantes :
- la vitesse de l'aéronef par rapport au sol est inférieure ou égale à un seuil prédéterminé,
- l'altitude de l'aéronef par rapport au sol est inférieure ou égale à un seuil prédéterminé,
- l'aéronef se trouve au moins sensiblement dans l'axe de la piste d'atterrissage, et
- la configuration aérodynamique de l'aéronef correspond à la phase d'atterrissage de celui-ci,
sont simultanément remplies.

5. Dispositif selon la revendication 4,
caractérisé en ce que, entre lesdits moyens de comparaison (14) et lesdits moyens d'alerte ou alarme (7), il est prévu un élément logique, tel qu'une porte ET (16), dont les entrées reçoivent l'information fournie par lesdits moyens de comparaison (14) quand elle est positive et les conditions relatives à la situation et à la configuration de l'aéronef, et dont la sortie est reliée auxdits moyens d'alerte ou alarme (7).

## Patentansprüche

1. Verfahren zur Erzeugung einer Information, einer Warnung oder eines Alarms für ein sich über einem Gelände mit bekanntem Relief, insbesondere in der Nähe seiner Landebahn, bewegendes Flugzeug, wenn die Flugbahn des Flugzeugs ein Relief des Geländes erfassen kann, bei dem:
- für das Gelände ein geographisches Koordinatengitter erzeugt wird, dessen Maschen jeweils ein bestimmtes Relief darstellen,
- die Flugbahn des Flugzeugs während eines vorherbestimmten Zeitabschnitts vorhergesagt wird,
- ein etwaiger Schnittpunkt der Flugbahn mit dem Relief mindestens einer der Maschen bestimmt wird und
- in Abhängigkeit vom Ergebnis der Bestimmung eine Warnung oder ein Alarm ausgelöst wird,
dadurch gekennzeichnet, daß die von der vorhergesagten Flugbahn erfaßten Gittermaschen und die Maschen mit der Landebahn des Flugzeugs miteinander verglichen werden, so daß, wenn die Information aus dem Vergleich negativ ist, die Warnung oder der Alarm aktiviert bleiben kann, und die Warnung oder der Alarm blockiert wird, wenn die Information aus dem Vergleich positiv ist und zudem folgende Bedingungen gleichzeitig erfüllt sind:
- Die Geschwindigkeit des Flugzeugs über Grund ist niedriger oder gleich einem vorherbestimmten Schwellenwert,
- die Höhe des Flugzeugs über Grund ist niedriger oder gleich einem vorherbestimmten Schwellenwert,
- das Flugzeug befindet sich zumindest annähernd in der Landebahnachse und
- die aerodynamische Konfiguration des Flugzeugs entspricht seiner Landephase.

2. Verfahren nach Anspruch 1,
dadurch gekennzeichnet, daß für ein gegebenes Gelände in der Nähe einer oder mehrerer Landebahnen dieses Geländes ein feineres Maschengitter als in allen anderen Fällen erzeugt wird.

3. Verfahren nach Anspruch 1 oder Anspruch 2,
dadurch gekennzeichnet, daß als aerodynamische Konfigurationsbedingungen des Flugzeugs in Verbindung mit der Landephase folgende Kriterien berücksichtigt werden: ausgefahrene Vorflügel und Klappen sowie ausgefahrenes Fahrgestell.

4. Vorrichtung zur Erzeugung einer Information, einer Warnung oder eines Alarms für die Anwendung des Verfahrens nach einem der Ansprüche 1 bis 3 für ein sich über einem Gelände mit bekanntem Relief, insbesondere in der Nähe seiner Landebahn, bewegendes Flugzeug, wenn die Flugbahn des Flugzeugs ein Relief des Geländes erfassen kann, mit:
- Mitteln zur Erzeugung eines geographischen Koordinatengitters des Geländes, dessen Maschen jeweils ein bestimmtes Relief darstellen,
- Mitteln zur Flugbahnvorhersage des Flugzeugs während eines vorherbestimmten Zeitabschnitts,
- Mitteln zur Bestimmung eines etwaigen Schnittpunkts der vorhergesagten Flugbahn mit dem Relief mindestens einer Masche und
- Warn- oder Alarmmitteln, die in Abhängigkeit von den Mitteln zur Schnittpunktbestimmung aktiviert werden können,
dadurch gekennzeichnet, daß sie zwischen den Schnittpunktbestimmungsmitteln (4) und den Warn- oder Alarmmitteln (7) Mittel (14) zum Vergleich der von der vorhergesagten Flugbahn erfaßten Gittermaschen mit den Maschen der Landebahn des Flugzeugs hat, so daß, wenn die von den Vergleichsmitteln (14) erzeugte Information negativ ist, die Alarm- oder Warnmittel (7) aktiviert bleiben können, und die Alarm- oder Warnmittel (7) blockiert werden, wenn die von den Vergleichsmitteln (14) erzeugte Information positiv ist und zudem gleichzeitig folgende Bedingungen erfüllt sind:
- Die Geschwindigkeit des Flugzeugs über Grund ist niedriger oder gleich einem vorherbestimmten Schwellenwert,
- die Höhe des Flugzeugs über Grund ist niedriger oder gleich einem vorherbestimmten Schwellenwert,
- das Flugzeug befindet sich zumindest annähernd in der Landebahnachse und
- die aerodynamische Konfiguration des Flugzeugs entspricht seiner Landephase.

5. Vorrichtung nach Anspruch 4,
dadurch gekennzeichnet, daß zwischen den Vergleichsmitteln (14) und den Warn- oder Alarmmitteln (7) ein Logikbaustein wie z.B. eine UND-Schaltung (16) vorgesehen ist, an deren Eingänge gelangen die von den Vergleichsmitteln (14) erzeugte Information, wenn diese positiv ist, und die Situations- und Konfigurationsbedingungen des Flugzeugs, und deren Ausgang mit den Warn- oder Alarmmitteln (7) verbunden ist.

## Claims

1. A method for supplying information, an alert or alarm for an aircraft manoeuvering above terrain with known relief, especially in the vicinity of a runway for said aircraft, when the trajectory of the aircraft is capable of intercepting a relief of said terrain, in which:
- for said terrain, a grid of geographic coordinates is established, each mesh of which has a defined relief,
- the trajectory of the aircraft, over a predetermined time interval, is predicted,
- any intersection between said trajectory and the relief of at least one of said meshes is determined, and
- an alert or alarm is triggered depending on the result of said determination,
characterized in that a comparison is performed between the meshes of the grid which are intercepted by said predicted trajectory and the meshes containing the runway for the aircraft, so that, if the information supplied by said comparison is negative, the alert or alarm remains capable of being activated, and the alert or alarm is inhibited if the information supplied by said comparison is positive and if, moreover, the following conditions are simultaneously fulfilled:
- the ground speed of the aircraft is less than or equal to a predetermined threshold,
- the altitude of the aircraft above the ground is less than or equal to a predetermined threshold,
- the aircraft is at least substantially in the axis of the runway, and
- the aerodynamic configuration of the aircraft corresponds to the landing phase thereof.

2. The method as claimed in claim 1, characterized in that, for given terrain, in the vicinity of one or more runways contained in this terrain, a grid is established with finer meshing than anywhere else.

3. The method as claimed in claim 1 or claim 2, characterized in that, as conditions of aerodynamic configuration of the aircraft which are associated with the landing phase, account is taken of the following criteria: slats and flaps extended, and landing gear lowered.

4. A device for supplying information, an alert or alarm, for implementing the method according to any one of claims 1 to 3, for an aircraft manoeuvering above terrain with known relief, particularly in the vicinity of a runway for said aircraft, when the trajectory of the aircraft is capable of intercepting a relief of said terrain, comprising:
- means of establishing a grid of geographic coordinates, for said terrain, each mesh of which exhibits a defined relief,
- means of predicting the trajectory of the aircraft over a predetermined time interval,
- means of determining any intersection between said predicted trajectory and the relief of at least one of said meshes, and
- alert or alarm means which are capable of being activated subject to said determination means,
characterized in that it includes, between said determination means (4) and said alert or alarm means (7), means (14) for comparison between the meshes of said grid which are intercepted by said predicted trajectory and the meshes containing the runway for the aircraft, such that, if the information supplied by said comparison means (14) is negative, said alert or alarm means (7) remain capable of being activated, and said alert or alarm means (7) are inhibited if the information supplied by said comparison means (14) is positive and if, moreover, the following conditions are simultaneously fulfilled:
- the ground speed of the aircraft is less than or equal to a predetermined threshold,
- the altitude of the aircraft above the ground is less than or equal to a predetermined threshold,
- the aircraft is at least substantially in the axis of the runway, and
- the aerodynamic configuration of the aircraft corresponds to the landing phase thereof.

5. The device as claimed in claim 4, characterized in that, between said comparison means (14) and said alert or alarm means (7), a logic element, such as an AND gate (16) is provided, the inputs of which receive the information supplied by said comparison means (14) when it is positive and the conditions relating to the situation and to the configuration of the aircraft, and the output of which is linked to said alert or alarm means (7).
